# FASCICULE DE BREVET EUROPEEN

(11) **EP 1 357 279 B1**
(45) Date de publication et mention de la délivrance du brevet: **27.07.2005**
(21) Numéro de dépôt: 03100539.0
(22) Date de dépôt: 17.08.1998
(51) Int. Cl.: F02C 7/045, F04D 29/66

(54) **Ensemble réducteur de bruit pour turboréacteur d'aéronef**
Geräuschdämpfungseinrichtung für ein Mantelstromtriebwerk
Noise reducing attachment for a turbofan engine

(30) Priorité: 19.08.1997 FR 9710481
(43) Date de publication de la demande: 29.10.2003
(62) Demande divisionnaire de: 98402072.7
(73) Titulaire: AIRBUS FRANCE, 31060 Toulouse (FR)
(72) Inventeur: PORTE, Alain, 31770, COLOMIERS (FR); ANDRE, Robert, 31320, AUZEVILLE (FR)
(74) Mandataire: Poulin, Gérard

(56) Documents cités:
- EP-A- 0 352 993
- GB-A- 1 150 889
- GB-A- 2 010 434
- GB-A- 2 065 766
- GB-A- 2 273 131
- US-A- 4 509 616
- US-A- 4 887 949

## Description

### Domaine technique

L'invention concerne un ensemble réducteur de bruit pour un turboréacteur d'aéronef. Cet ensemble comprend une structure d'entrée d'air, un carter de soufflante et une pièce annulaire assurant le raccordement de la structure d'entrée d'air sur le carter de soufflante.

Un tel ensemble réducteur de bruit peut être implanté sur tous les turboréacteurs incluant une soufflante placée à l'intérieur d'une nacelle entourant le moteur.

### Etat de la technique

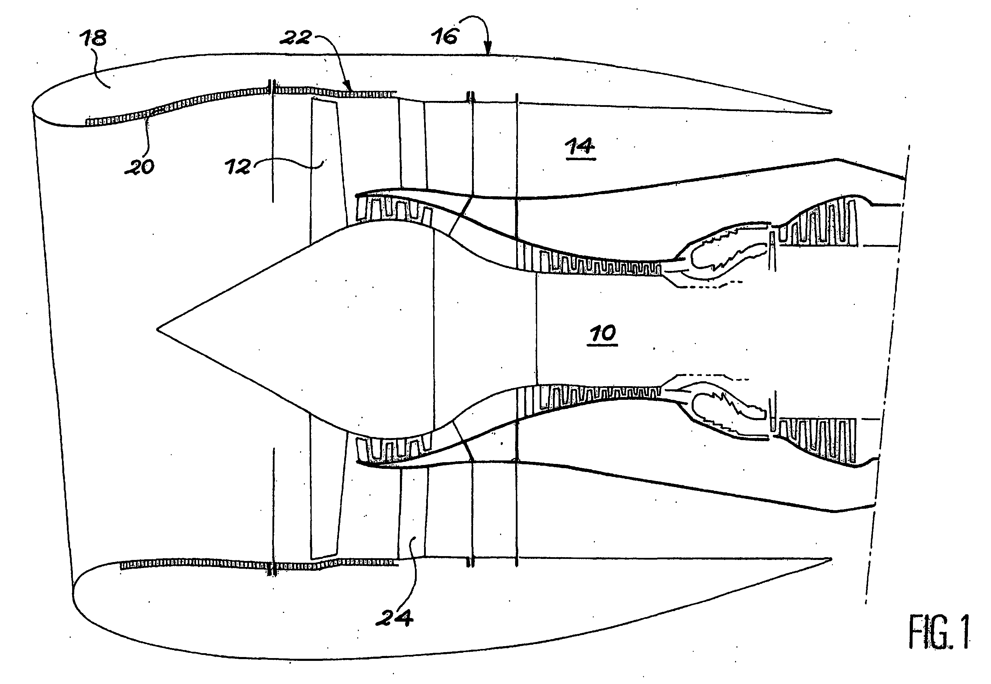

Sur la figure 1 des dessins annexés, on a représenté très schématiquement un turboréacteur à double flux de conception classique. Un tel turboréacteur comprend un moteur central 10, centré sur un axe longitudinal et dont l'extrémité prévue pour être orientée vers l'avant est située sur la gauche de la figure. A partir de cette extrémité avant, le moteur central 10 comporte de façon connue un compresseur, une turbine haute pression entraînant le compresseur, une chambre de combustion et une turbine basse pression. La turbine basse pression entraîne à son tour une soufflante 12 placée à l'avant du moteur central 10. Plus précisément, les pales de la soufflante 12 sont situées dans un canal annulaire 14, appelé "canal de soufflante", délimité entre l'enveloppe extérieure du moteur central 10 et l'enveloppe intérieure d'une nacelle 16, disposée coaxialement autour du moteur central 10.

La partie avant de la nacelle 16 forme une structure d'entrée d'air 18 dont le bord d'attaque est caréné. A son extrémité arrière, la paroi intérieure 20 de la structure d'entrée d'air 18 est habituellement fixée à l'extrémité avant d'un carter de soufflante 22. Ce carter de soufflante 22 est disposé autour de la soufflante 12 et il est relié rigidement à la structure du moteur central 10 par au moins un jeu de bras 24 orientés radialement. Cette liaison mécanique rigide entre le carter de soufflante 22 et la structure du moteur central 10 permet de maîtriser au mieux le jeu existant entre ce carter et les extrémités des pales de la soufflante 12.

Dans les turboréacteurs développés ces dernières années, la réduction du bruit constitue l'un des objectifs prioritaires. A cet effet, il est de pratique courante de réaliser la majeure partie de la paroi intérieure de la nacelle 16 sous la forme d'une structure alvéolaire de réduction de bruit. Comme on l'a représenté très schématiquement sur la figure 1, la paroi intérieure 20 de la structure d'entrée d'air 18 ainsi que le carter de soufflante 22 présentent habituellement, au moins en partie, une telle structure alvéolaire.

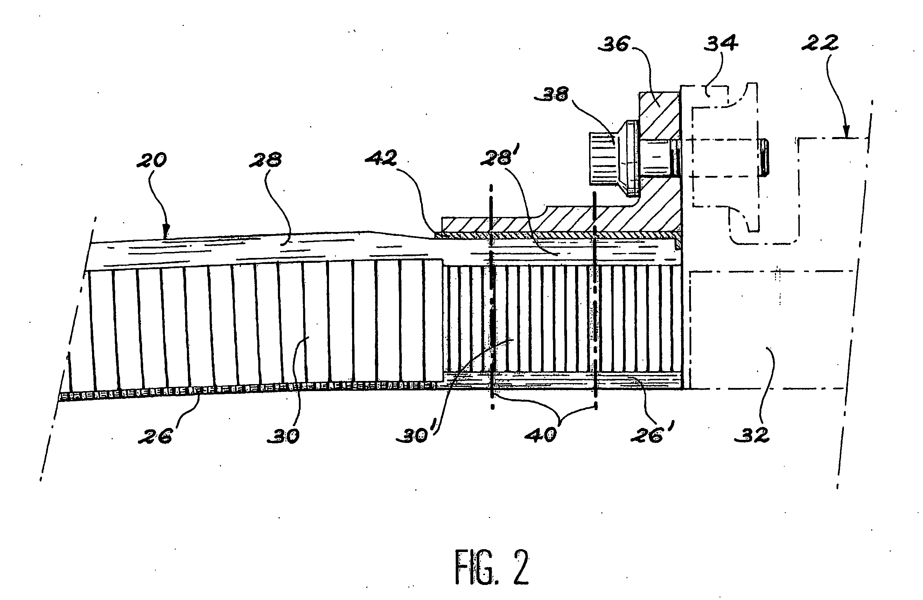

Sur la figure 2 des dessins annexés, on a représenté plus en détail la zone de jonction de l'extrémité arrière de la paroi intérieure 20 sur l'extrémité avant du carter de soufflante 22, dans un turboréacteur de l'art antérieur.

En dehors de la zone dans laquelle s'effectue la jonction, la paroi intérieure 20 de la structure d'entrée d'air présente une structure alvéolaire de réduction de bruit. Cette structure, de type sandwich, se compose d'une peau interne 26 perméable à l'air, d'une peau externe 28, imperméable à l'air, et d'une âme alvéolaire 30 interposée entre les peaux. La peau interne 26 est réalisée par exemple sous la forme d'une tôle perforée ou d'un tissu ajouré en un matériau tel que du carbone ou un métal. La peau externe 28 est généralement une structure composite multicouche qui fait office de réflecteur acoustique et assure la transmission principale des efforts. Enfin, l'âme alvéolaire 30 est généralement de type nid d'abeilles et formée d'alvéoles de grandes dimensions.

Le carter de soufflante 22 est généralement une pièce métallique. Comme on l'a illustré de façon très schématique sur la figure 2, cette pièce est de préférence évidée, au moins sur une partie de sa longueur, afin qu'une structure 32 de réduction de bruit équipe sa surface intérieure. Cette structure 32 est alors formée principalement d'une structure alvéolaire, revêtue d'une peau interne perméable à l'air sur sa face tournée vers le canal de soufflante 14.

Afin de permettre l'assemblage de la structure d'entrée d'air 18 et du carter de soufflante 22, ce dernier est équipé, à son extrémité avant, d'une bride extérieure annulaire 34. L'assemblage est assuré par une pièce annulaire de raccordement 36, à section en forme de L, montée autour de l'extrémité arrière de la paroi intérieure 20 et fixée à la bride 34 par des boulons 38 circonférentiellement répartis.

Dans les turboréacteurs de l'art antérieur, la liaison entre la pièce annulaire de raccordement 36 et la paroi intérieure 20 de la structure d'entrée d'air est assurée par des organes de fixation tels que des vis fraisées ou des rivets (illustrés schématiquement par des traits mixtes 40 sur la figure 2), qui traversent sur toute son épaisseur l'extrémité arrière de la paroi intérieure 20.

Pour tenir compte du fait que la majeure partie des efforts transmis entre le moteur central 10 et la structure d'entrée d'air 18 transite par cette jonction, la structure de la partie arrière de la paroi intérieure 20 est modifiée dans cette zone de façon à être renforcée.

Ainsi, comme l'illustre la figure 2 la partie arrière de la paroi intérieure 20, sur laquelle est fixée la pièce annulaire de raccordement 36, présente une peau interne 26' renforcée et imperméable à l'air, une peau externe 28' également renforcée, ainsi qu'une âme alvéolaire 30' renforcée, en général métallique (aluminium) et très densifiée, formée d'alvéoles de dimension réduite, souvent remplies de résine en vue de résister aux efforts d'écrasement des organes de fixation 40.

La technique utilisée actuellement pour effectuer la jonction entre la structure d'entrée d'air et le carter de soufflante a pour première conséquence une perte totale de l'effet de réduction de bruit dans la zone d'éclissage.

Cette technique se traduit également par une augmentation de la masse dans la zone de jonction, par des risques de corrosion de l'âme alvéolaire métallique, par des difficultés de fabrication (cintrage d'alvéoles de petite dimension, usinage en forme de l'âme alvéolaire), par des difficultés de pose des organes de fixation au travers de l'âme alvéolaire 30' et par des risques d'affaissement de la partie arrière de la paroi 20 sous charge, à l'emplacement des organes de fixation.

Enfin, du fait que la paroi intérieure 20 est généralement fabriquée par drapages successifs sur un mandrin présentant la forme intérieure de la structure d'entrée d'air, ses dimensions extérieures sont peu précises. Avant de fixer la pièce annulaire de raccordement 36 sur l'extrémité arrière de la paroi 20, il est donc nécessaire d'effectuer une reprise d'usinage de cette surface extérieure et d'interposer une cale annulaire 42.

Le document GB-A-2 273 131 décrit une structure d'entrée d'air de moteur d'aéronef, dans laquelle le carter de soufflante intègre une structure annulaire en nid d'abeilles. A son extrémité avant, le carter de soufflante comprend une bride servant à la fixation d'un renfort interne à la nacelle et un prolongement vers l'avant servant à la fixation de l'entrée d'air.

### Exposé de l'invention

L'invention a principalement pour objet un ensemble réducteur de bruit incluant une structure d'entrée d'air et un carter de soufflante d'un turboréacteur d'aéronef, cet ensemble permettant de réduire également le bruit dans la zone de jonction, tout en réduisant la masse par rapport aux techniques actuelles.

L'ensemble réducteur de bruit conforme à l'invention a aussi pour objectif de faciliter la fabrication et l'assemblage, tout en supprimant les risques d'affaissement de la paroi intérieure de la structure d'entrée d'air sous charge, à l'emplacement des organes de fixation.

Conformément à l'invention, ce résultat est obtenu au moyen d'un ensemble réducteur de bruit, pour turboréacteur, réalisé conformément à la revendication 1.

Des perfectionnements de l'invention sont définis par les revendications 2 à 5.

### Brève description des dessins

On décrira à présent, à titre d'exemples non limitatifs, un mode de réalisation de l'invention, en se référant aux dessins annexés, dans lesquels :
- la figure 1, déjà décrite, représente schématiquement, en coupe longitudinale, un turboréacteur à double flux de l'art antérieur ;
- la figure 2, déjà décrite, illustre à plus grande échelle la zone de jonction de l'art antérieur entre la structure d'entrée d'air et le carter de soufflante du turboréacteur de la figure 1 ;
- la figure 3 est une vue en coupe comparable à la figure 2, qui représente un exemple utile à la compréhension de l'invention, dans une première forme de réalisation de la zone de jonction entre la structure d'entrée d'air et le carter de soufflante d'un turboréacteur ;
- les figures 4 à 7 sont des vues en coupe comparables à la figure 3, qui représentent des variantes de la première forme de réalisation de la zone de jonction, combinées l'exemple de la figure 3;
- la figure 8 est une vue en coupe comparable à la figure 3, illustrant l'exemple de la figure 3, combiné à une deuxième forme de réalisation de la zone de jonction; et
- la figure 9 est une vue en coupe comparable à la figure 8, illustrant un mode de réalisation de l'invention.

### Description détaillée d'un mode de réalisation préféré

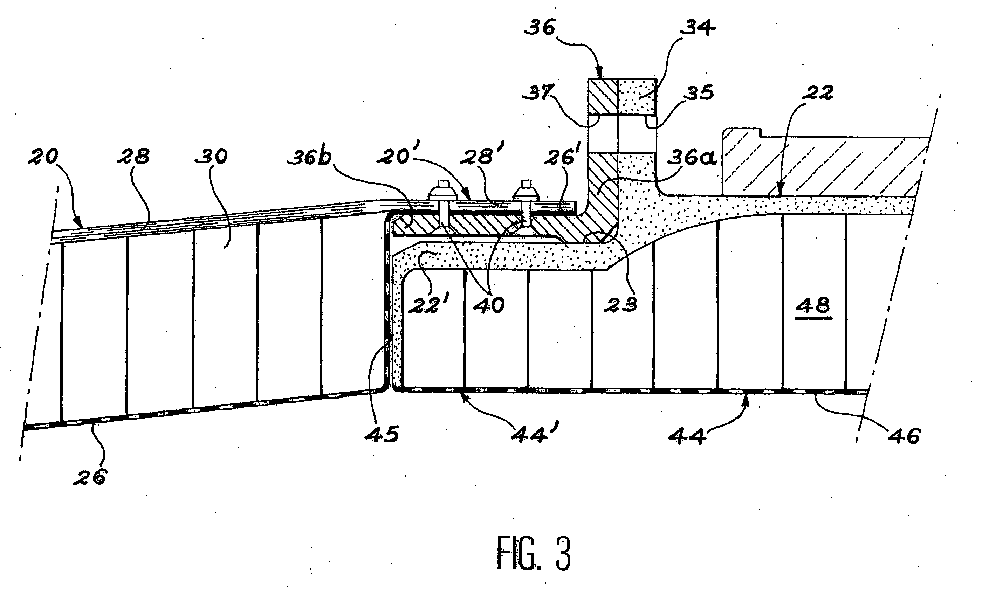

Les figures 3 à 9 représentent la zone de jonction entre l'extrémité arrière de la paroi intérieure 20 d'une structure d'entrée d'air et l'extrémité avant d'un carter de soufflante 22, dans un turboréacteur tel que celui que l'on a décrit précédemment en se référant à la figure 1.

De façon classique, en avant de la zone de jonction, la paroi intérieure 20 de la structure d'entrée d'air se présente sous la forme d'une structure sandwich incluant une peau interne 26 perméable à l'air, une peau externe 28 imperméable à l'air et une âme alvéolaire 30 interposée entre ces deux peaux. Cette structure étant identique à celles que l'on trouve dans les turboréacteurs existants, elle ne sera pas décrite plus en détail.

La partie arrière 20' de la paroi intérieure 20, utilisée afin d'assurer la jonction de cette paroi avec le carter de soufflante 22, est dépourvue d'âme alvéolaire. De plus, cette partie arrière 20' de la paroi intérieure 20 est située sensiblement dans le prolongement de la peau externe 28. Elle comprend des prolongements vers l'arrière 26' et 28', respectivement de la peau interne 26 et de la peau externe 28. Ces prolongements 26' et 28' sont appliqués l'un contre l'autre, après que la peau interne 26 ait cheminé le long de la face arrière de l'âme alvéolaire 30, comme l'illustrent les figures 3 à 9.

Du fait que la partie arrière 20' de la paroi intérieure 20 est dépourvue d'âme alvéolaire 30 et située dans le prolongement de la peau externe 28, un espace annulaire est libéré à l'intérieur de la partie arrière 20', entre cette partie arrière et le canal de soufflante. Cet espace annulaire est utilisé pour loger une structure alvéolaire 44' de réduction de bruit.

La structure alvéolaire 44' de réduction de bruit assure la continuité entre une structure alvéolaire 44 de réduction de bruit, qui équipe intérieurement le carter de soufflante 22, et la paroi intérieure 20 de la structure d'entrée d'air 18.

Sur les figures 3 à 9, la structure alvéolaire 44' logée à l'intérieur de la partie arrière 20' de la paroi intérieure 20 est réalisée d'un seul tenant avec la structure alvéolaire 44 du carter de soufflante 22, dont elle constitue un prolongement vers l'avant.

En variante, la structure alvéolaire 44' peut aussi former une pièce distincte, séparée de la structure alvéolaire 44 qui équipe le carter de soufflante.

La paroi intérieure de la nacelle du turboréacteur se trouve ainsi équipée de structures alvéolaires de réduction de bruit, pratiquement sans discontinuité, dans la zone de jonction entre la structure d'entrée d'air et le carter de soufflante, d'où une amélioration des performances acoustiques.

Cet agencement se traduit également par un gain de masse important, par la suppression du risque de corrosion et par une protection au feu de la pièce 36b (dans la première forme de réalisation de la zone de jonction, illustrée sur les figures 3 à 8).

De plus, du fait de la nature monolithique de la partie arrière de la paroi intérieure fixée sur la pièce annulaire de raccordement, les réparations sont simplifiées. Considérant également que cette partie n'est pas exposée à l'écoulement aérodynamique, les fixations utilisées peuvent être à "empreinte", et donc aisément démontables. Tout cela réduit les coûts d'exploitation.

Comme dans les jonctions de l'art antérieur, la liaison entre la paroi intérieure 20 et le carter de soufflante 22 est assurée par une pièce annulaire de raccordement 36, à section en forme de L. Une première branche 36a de cette pièce 36, constituant une bride circulaire, est fixée à la bride extérieure annulaire 34 prévue à l'extrémité avant du carter de soufflante 22. Cette fixation est assurée par des boulons (non représentés) traversant des trous en vis-à-vis 35 et 37, formés respectivement dans la bride 34 et dans la première branche 36a de la pièce 36.

La deuxième branche 36b de la pièce de raccordement 36 forme un cylindre qui est reçu à l'intérieur de la partie arrière 20' de la paroi intérieure 20, dans la première forme de réalisation de la zone de jonction illustrée sur les figures 3 à 8.

La fixation de la partie arrière 20' de la paroi intérieure 20 sur cette deuxième branche 36b de la pièce de raccordement 36 est assurée par des organes de fixation 40 tels que des vis fraisées ou des rivets. Etant donné que la partie arrière 20' de la paroi 20 est dépourvue d'âme alvéolaire, la fixation est réalisée sans difficulté particulière et sans risque d'affaissement sous charge. De plus, du fait que la majeure partie des efforts est transmise au travers de la peau externe 28, la transmission des efforts s'effectue de façon aussi efficace que dans les structures de l'art antérieur.

Du fait que la deuxième branche 36b de la pièce de raccordement 36 est placée à l'intérieur de la partie arrière 20' de la paroi intérieure 20, aucune reprise d'usinage n'est nécessaire lors de l'assemblage. En effet, la surface intérieure de la paroi 20 présente une forme et des dimensions parfaitement maîtrisées, puisque la fabrication de cette paroi par drapage s'effectue en commençant par le drapage de la peau interne 26 sur un mandrin de dimensions et de forme connues.

L'absence d'âme alvéolaire renforcée, en général métallique et très densifiée, permet également de faciliter la fabrication de la paroi intérieure 20, notamment en évitant la difficulté d'usinage en forme d'une structure en nid d'abeilles de forte densité et le cintrage des différentes couches sur le mandrin utilisé lors du drapage.

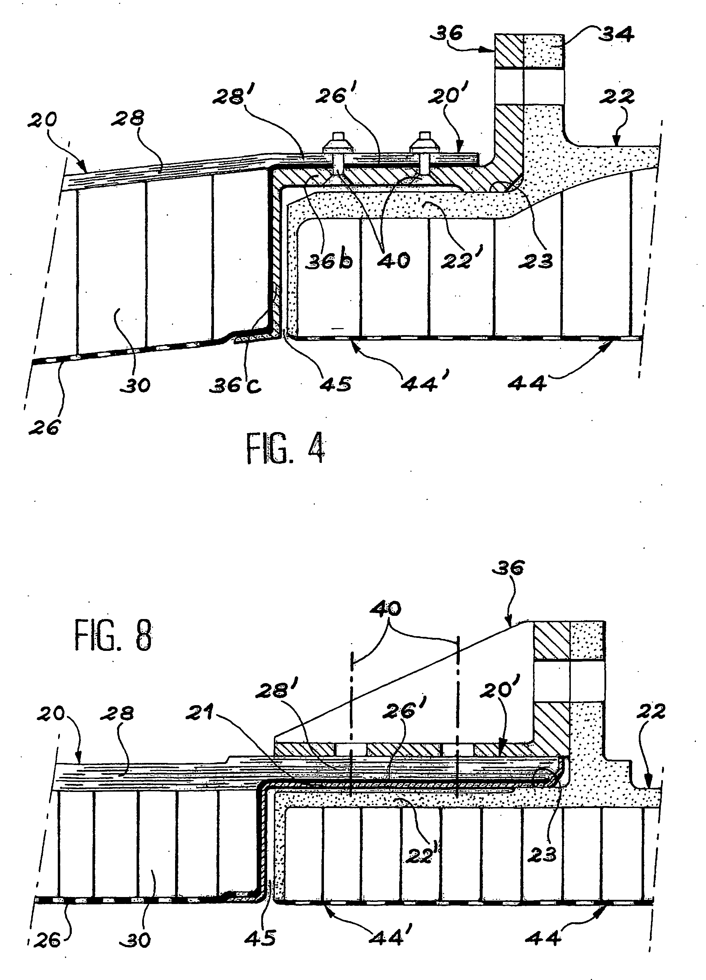

Sur les figures 3 et 4, le carter de soufflante 22 présente un prolongement vers l'avant 22' au-delà de la bride 34. Ce prolongement 22' s'étend jusqu'en vis-à-vis de la face arrière de l'âme alvéolaire 30, dans l'espace annulaire ménagé à l'intérieur de la partie arrière 20' de la paroi 20. Le prolongement vers l'avant 44' de la structure alvéolaire 44 de réduction de bruit est alors fixé directement à l'intérieur de ce prolongement 22'.

La structure alvéolaire 44 de réduction de bruit, ainsi que son prolongement 44' vers l'avant, sont formés d'une peau interne 46 perméable à l'air, de structure comparable à celle de la peau interne 26 de la paroi 20, et d'une âme alvéolaire 48 interposée entre la peau 46 et le carter de soufflante 22. L'âme alvéolaire 48 présente également une structure comparable à celle de l'âme alvéolaire 30 de la paroi 20. Dans ce cas, la réflexion acoustique et la transmission des efforts sont assurés par le carter de soufflante 22 proprement dit.

Comme on l'a illustré notamment sur les figures 3 et 4, le prolongement 22' du carter de soufflante 22 recouvre avantageusement le bord avant de l'âme alvéolaire 48.

Etant donné que le carter de soufflante 22 est habituellement métallique, la surface extérieure 23 du prolongement vers l'avant 22' peut être usinée afin d'assurer le centrage de la pièce de raccordement 36, comme on l'a illustré sur les figures 3 et 4.

La variante de réalisation illustrée sur la figure 4 se distingue essentiellement de celle de la figure 3 par le fait que la pièce de raccordement 36 comporte dans ce cas une partie avant 36c, qui s'étend radialement vers l'intérieur le long de la face arrière de l'âme alvéolaire 30 de la paroi intérieure 20.

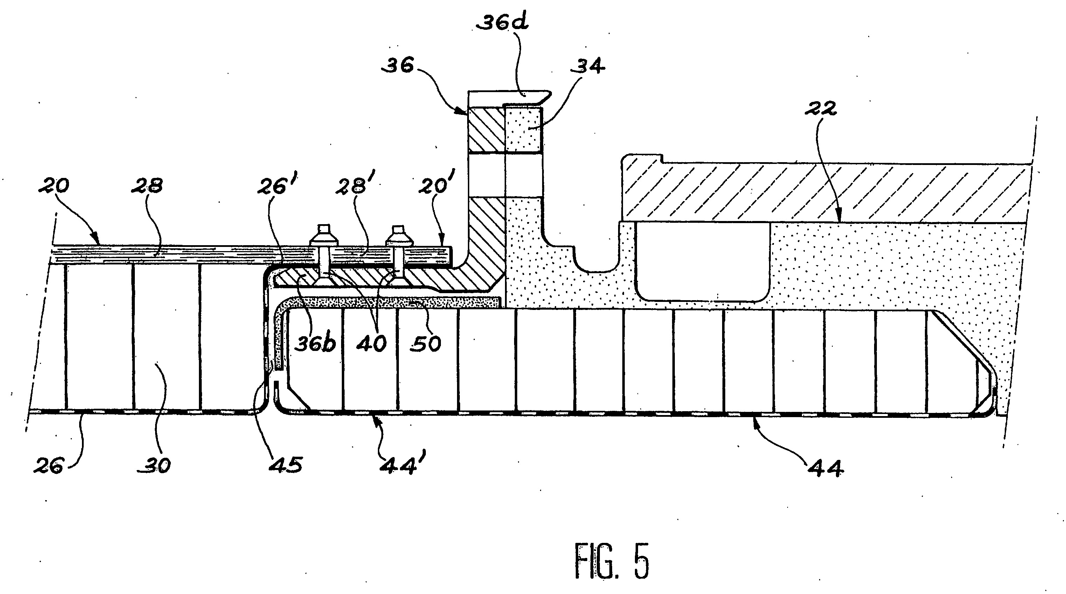

La figure 5 représente une autre variante de la première forme de réalisation de la zone de jonction, dans laquelle le prolongement vers l'avant 22' du carter de soufflante 22 est supprimé. Dans ce cas, le prolongement vers l'avant 44' de la structure alvéolaire 44 de réduction de bruit est placé à l'intérieur d'une pièce rapportée 50. Cette pièce rapportée 50 présente une section en forme de L dont une branche entoure le prolongement vers l'avant 44' de la structure alvéolaire 44 et dont l'autre branche recouvre au moins partiellement le bord avant de cette structure. Dans ce cas, la pièce rapportée 50 est fixée sur le prolongement vers l'avant de la structure alvéolaire 44 par des moyens de fixation tels que des éclisses (non représentées).

Dans cette variante de réalisation illustrée sur la figure 5, la pièce de raccordement 36 comporte des parties de centrage et de guidage 36d qui sont placées autour de la bride 34 du carter de soufflante 22, de façon à assurer le centrage de la pièce 36 par rapport à ce carter sur la figure 5. Les parties de centrage et de guidage 36d font partie intégrante de la pièce de raccordement 36.

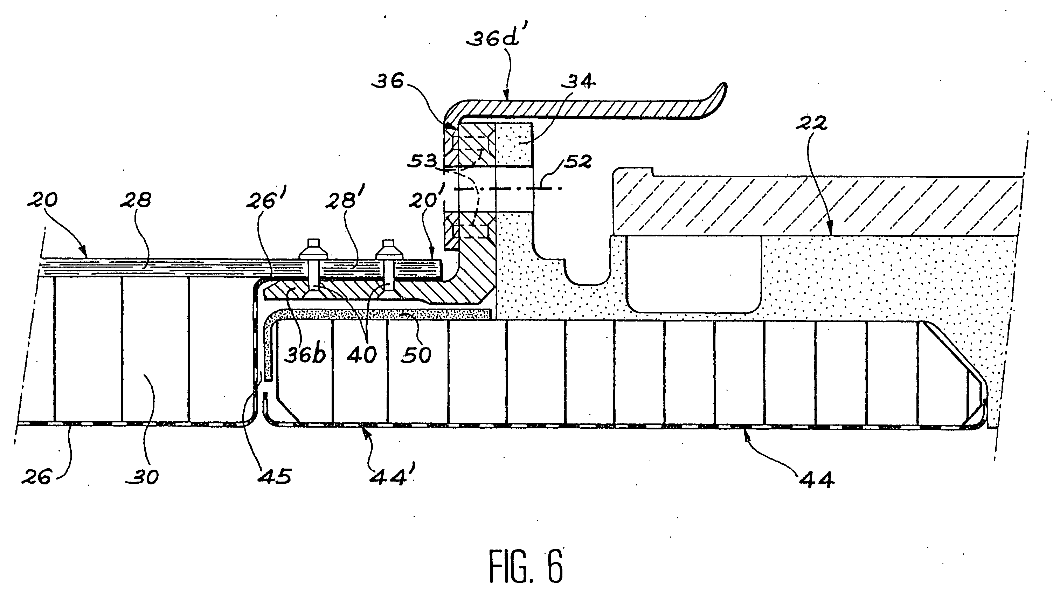

De façon comparable, la figure 6 montre l'adjonction de parties de centrage et guidage 36' sur la pièce de raccordement 36. Ces parties 36' sont fixées sur la pièce 36 par des organes de fixation 53 situés en des emplacements différents de ceux des organes de fixation 52 de ladite pièce 36 sur la bride 34, et notamment en des emplacements décalés radialement par rapport à cette dernière fixation. Les parties de centrage et de guidage 36' s'étendant axialement vers l'arrière autour de la bride 34. Elles sont notamment utilisées durant l'installation ou la dépose de l'entrée d'air, pour éviter l'endommagement éventuel des pièces 50 et 44'.

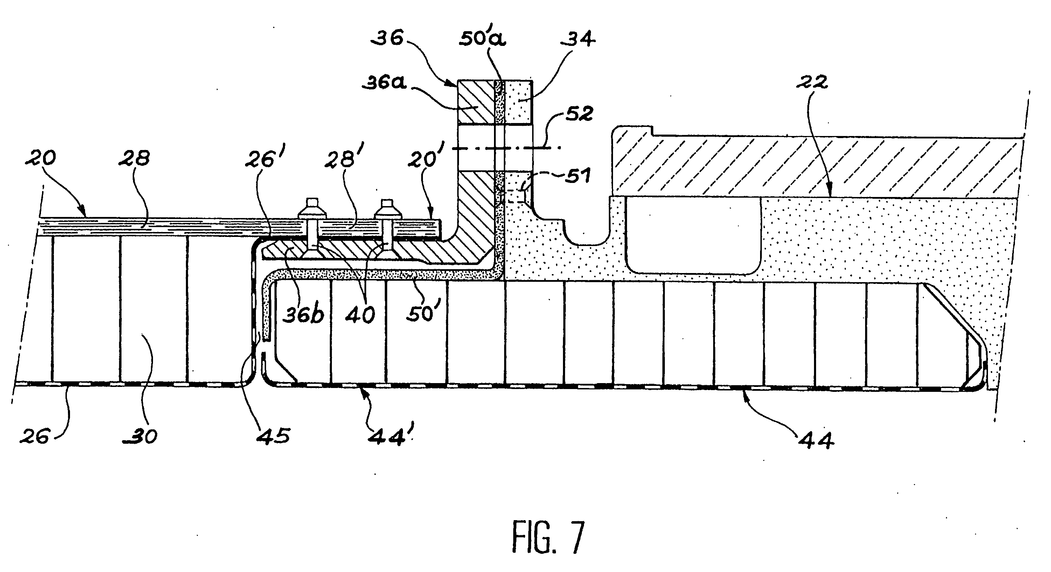

Une autre variante de la première forme de réalisation de la zone de jonction est illustrée sur la figure 7. Comme dans le cas des figures 5 et 6, le prolongement vers l'avant 44' de la structure alvéolaire 44 de réduction de bruit est logé dans une pièce rapportée 50'. Toutefois, la pièce rapportée 50' comporte ici, en plus de la partie à section en forme de L qui entoure le prolongement 44', une partie plane 50'a, fixée entre la bride 34 et la première branche 36a de la pièce de raccordement 36. La fixation est assurée, par exemple, par des rivets ou des vis 51 qui relient la partie plane 50'a à la bride 34, en des emplacements décalés par rapport aux organes de fixation démontables 52 de la branche 36a sur la bride 34. Ainsi, la pièce 50' reste solidaire de la bride moteur 34 lors de la dépose de la structure d'entrée d'air 18, et elle soutient et protège les structures alvéolaires 44 et 44'.

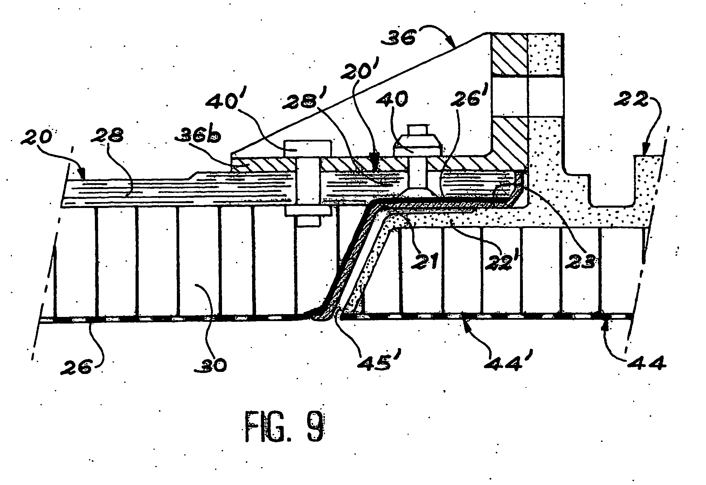

Les figures 8 et 9 représentent deux variantes d'une deuxième forme de réalisation de la zone de jonction, dans laquelle la deuxième branche 36b de la pièce de raccordement 36 est fixée à l'extérieur de la partie arrière 20' de la paroi intérieure 20. Dans ce cas, une reprise d'usinage est nécessaire sur la surface extérieure de la partie arrière de la paroi 20, avant de réaliser la fixation de la pièce de raccordement 36, à l'aide des organes de fixation 40. Cependant, tous les autres avantages demeurent, y compris notamment la présence de structures alvéolaires de réduction de bruit dans la zone de jonction entre la structure d'entrée d'air et le carter de soufflante.

Dans ce cas, une tôle de protection 21 recouvre avantageusement la surface intérieure de la partie arrière 20' de la paroi 20, comme l'illustrent les figures 8 et 9. Cette tôle de protection 21 se prolonge alors sur la face arrière de l'âme alvéolaire 30.

Sur les figures 8 et 9, le prolongement vers l'avant 44' de la structure alvéolaire 44 est monté dans un prolongement vers l'avant 22' du carter de soufflante 22, comme dans le cas des figures 3 et 4. Un usinage 23 effectué sur ce prolongement 22' peut alors être utilisé pour assurer le centrage de la partie arrière 20' de la paroi intérieure 20, comme l'illustrent les figures 8 et 9.

Dans toutes les réalisations illustrées sur les figures 3 à 8, la surface de jonction 45 entre la structure alvéolaire 44 et la partie de la paroi intérieure 20 attenante à la partie arrière 20' est orientée radialement par rapport à l'axe longitudinal du turboréacteur.

Comme on l'a illustré schématiquement sur la figure 9, cette surface de jonction 45' peut aussi être inclinée vers l'arrière, en allant vers l'extérieur du turboréacteur.

Conformément à un mode de réalisation de l'invention, la figure 9 se distingue également par le fait que la fixation de la branche 36b de la pièce de raccordement 36 est effectuée en partie par des organes de fixation classiques 40 traversant la partie arrière 20' de la paroi 20 et en partie par des organes de fixation "aveugles" 40' traversant la peau externe 28, en avant de la partie arrière 20'.

## Revendications

1. Ensemble réducteur de bruit, pour turboréacteur, ledit ensemble comprenant un carter de soufflante (22) une structure d'entrée d'air (18) munie d'une paroi intérieure (20) incluant une peau interne perméable (26), une peau externe imperméable (28) et une âme alvéolaire (30) interposée entre ces deux peaux, et une pièce de raccordement (36) fixée au carter de soufflante (22) et à la paroi intérieure (20) de la structure d'entrée d'air (18), **caractérisé en ce que** la pièce de raccordement (36) est fixée à la paroi intérieure (20) par des organes de fixation aveugles (40') qui traversent la peau externe (28).

2. Ensemble selon la revendication 1, dans lequel la paroi intérieure (20) de la structure d'entrée d'air (18) comprend une partie arrière (20') dépourvue d'âme alvéolaire et située sensiblement dans le prolongement de la peau externe (28), les organes de fixation aveugles (40') traversant la peau externe (28) en avant de ladite partie arrière (20').

3. Ensemble selon la revendication 1, dans lequel la partie arrière (20') de la paroi intérieure (20) est fixée à la pièce de raccordement (36) par des organes de fixation classiques (40).

4. Ensemble selon l'une quelconque des revendications 2 et 3, dans lequel une structure alvéolaire (44) de réduction de bruit est montée à l'intérieur du carter de soufflante (22) et comprend un prolongement vers l'avant (44') à l'intérieur de la partie arrière (20') de la paroi intérieure (20).

5. Ensemble selon la revendication 4, dans lequel le prolongement vers l'avant (44') de la structure alvéolaire (44) de réduction de bruit est placé à l'intérieur d'un prolongement vers l'avant (22') du carter de soufflante (22).

6. Ensemble selon l'une quelconque des revendications 4 et 5, dans lequel le prolongement vers l'avant (44') de la structure alvéolaire (44) de réduction de bruit est séparé de la paroi intérieure (20) attenante à la partie arrière (20') par une surface de jonction (45') inclinée vers l'arrière, en allant vers l'extérieur.

## Patentansprüche

1. Geräuschverringerungseinrichtung für ein Turbotriebwerk, welche Einrichtung umfaßt: ein Gebläsegehäuse (22), eine Lufteingangsstruktur (18), die versehen ist mit einer Innenwand (20), umfassend eine durchlässige Innenschicht (26), eine undurchlässige Außenschicht (28) sowie eine zellenförmige Seele (30), die zwischen diesen zwei Schichten eingefügt ist, sowie ein Anschlußelement (36), das am Gebläsegehäuse (22) und an der Innenwand (20) der Lufteingangsstruktur (18) befestigt ist, **dadurch gekennzeichnet, dass** das Anschlußelement (36) an der Innenwand (20) mittels Blindbefestigungsorgane befestigt ist, die die Außenschicht (28) durchsetzen.

2. Einrichtung nach Anspruch 1, bei der die Innenwand (20) der Lufteingangsstruktur (18) einen hinteren Bereich (20') umfaßt, der keine zellenförmige Seele aufweist und im wesentlichen in der Verlängerung der Außenschicht (28) angeordnet ist, wobei die Blindbefestigungsorgane (40') die Außenschicht (28) vor dem hinteren Bereich (20') durchsetzen.

3. Einrichtung nach Anspruch 1, bei der der hintere Bereich (20') der Innenwand (20) am Anschlußelement (36) durch klassische Befestigungsorgane (40) befestigt ist.

4. Einrichtung nach einem der Ansprüche 2 und 3, bei der eine zellenförmige Geräuschverringerungsstruktur (44) im Inneren des Gebläsegehäuses (22) montiert ist und eine Verlängerung nach vorne (44') innerhalb des hinteren Bereichs (20') der Innenwand (20) umfaßt.

5. Einrichtung nach Anspruch 4, bei der die Verlängerung der zellenförmigen Geräuschverringerungsstruktur (44) nach vorne (44') innerhalb einer Verlängerung des Gebläsegehäuses (22) nach vorne (22') angeordnet ist.

6. Einrichtung nach einem der Ansprüche 4 und 5, bei der die Verlängerung der zellenförmigen Geräuschverringerungsstruktur (44) nach vorne (44') von der an den hinteren Bereich (20') angrenzenden Innenwand (20) durch eine Verbindungsfläche (45') getrennt ist, die nach außen hin nach hinten geneigt ist.

## Claims

1. Noise reducing assembly for turbines, said assembly comprising a blower housing (22), an air inlet structure (18) equipped with an internal wall (20) comprising an internal permeable skin (26), an external impermeable skin (28) and a honeycomb core (30) interposed between said two skins, and a connecting part (36) fixed to the blower housing (22) and to the internal wall (20) of said air inlet structure (18), **characterized in that** the connecting part (36) is fixed to the internal wall (20) by blind fixing members (40') which traverse the external skin (28).

2. Assembly according to claim 1, wherein the internal wall (20) of the air inlet structure (18) comprises a rear part (20') not having a honeycomb core and located substantially in the extension of the external skin (28), the blind fixing members (40') traversing the external skin (28) in front of the said rear part (20').

3. Assembly according to claim 1, wherein the rear part (20') of the internal wall (20) is fixed to the connecting part (36) by conventional fixing members (40).

4. Assembly according to any one of the claims 2 and 3, wherein a honeycomb, noise reducing structure (44) is installed within the blower housing (22) and comprises a forward extension (44') within the rear part (20') of the internal wall (20).

5. Assembly according to claim 4, wherein the forward extension (44') of the honeycomb noise reducing structure (44) is placed within a forward extension (22') Of the blower housing (22).

6. Assembly according to either of the claims 4 and 5, wherein the forward extension (44') of the honeycomb noise reducing structure (44) is separated from the internal wall (20) contiguous with the rear part (20') by a rearwardly inclined, outwardly extending junction surface (45').
